# EUROPEAN PATENT SPECIFICATION

(11) **EP 4 418 393 B1**
(45) Date of publication and mention of the grant of the patent: **17.06.2026**
(21) Application number: 23887165.1
(22) Date of filing: 18.10.2023
(51) Int. Cl.: H01M 10/0562, H01M 10/0565, H01M 10/052

(54) **SOLID ELECTROLYTE MEMBRANE AND ALL-SOLID-STATE BATTERY COMPRISING SAME**
FESTELEKTROLYTMEMBRAN UND FESTSTOFFBATTERIE DAMIT
MEMBRANE ÉLECTROLYTIQUE SOLIDE ET BATTERIE TOUT SOLIDE LA COMPRENANT

(30) Priority: 16.11.2022 KR 20220153588
(43) Date of publication of application: 21.08.2024
(73) Proprietor: LG Energy Solution, Ltd., Seoul 07335 (KR)
(72) Inventor: KIM, Yun Kyoung, Daejeon 34122 (KR); PARK, June, Daejeon 34044 (KR); RYU, Wonyeong, Daejeon 34044 (KR); CHOI, Bona, Daejeon 34044 (KR); LEE, Jieun, Daejeon 34122 (KR); KIM, Yeeun, Daejeon 34122 (KR); KIM, Youngbok, Daejeon 34122 (KR); KIM, Donghyeon, Daejeon 34122 (KR)
(74) Representative: Goddar, Heinz J.
(86) International application number: PCT/KR2023/016152
(87) International publication number: WO 2024/106765

(56) References cited:
- EP-B1- 3 553 868
- WO-A1-2020/261758
- WO-A1-2022/138896
- WO-A1-2022/174086
- CN-A- 110 383 561
- KR-A- 20190 036 548
- US-A1- 2015 147 660

## Description

### [Technical Field]

The present invention relates to a solid electrolyte membrane and an all-solid-state battery comprising the same.

### [Related Art]

A secondary battery is a device that converts external electrical energy into chemical energy and stores it to generate electricity when needed. They are also called rechargeable batteries because they can be recharged multiple times. Common types of secondary batteries include lead batteries, nickel-cadmium batteries (NiCd), nickel-metal hydride batteries (NiMH), and lithium secondary batteries. Secondary batteries offer both economic and environmental benefits over primary batteries, which are used once and discarded.

As wireless communication technology continues to advance, the demand for lightweight, thin, and miniaturized portable devices and automotive accessories is increasing, and the demand for secondary batteries used as energy sources for these devices is also increasing. In particular, as hybrid and electric vehicles become practical in terms of preventing environmental pollution, researchers are trying to use secondary batteries in the batteries of these next-generation vehicles to reduce manufacturing costs and weight and extend their lifespan. Among the various secondary batteries, lithium secondary batteries have recently gained prominence due to their light weight, high energy density, operating potential, and long cycle life.

Generally, lithium secondary batteries are fabricated by mounting an electrode assembly consisting of a negative electrode, a positive electrode, and a separator inside a metal can, such as a cylindrical or angular shape, or a pouch-type case of aluminum laminated sheet, and injecting an electrolyte into the electrode assembly.

However, in the case of lithium secondary batteries, a cylindrical, angular, or pouch-type case with a certain amount of space is required, which limits the development of various types of portable devices. Therefore, there is a need for a new type of lithium secondary battery that can be easily transformed. In particular, as an electrolyte included in a lithium secondary battery, an electrolyte with excellent ionic conductivity and no leakage is required.

In the past, electrolytes for lithium secondary batteries have been mainly liquid electrolytes made of lithium salts dissolved in non-aqueous organic solvents. However, these liquid electrolytes are not only prone to electrode material degradation, volatilization of the organic solvents combustion or explosion due to elevated ambient temperatures and the temperature of the battery itself, and to leakage, making it difficult to realize various types of highly safe lithium secondary batteries.

On the other hand, an all-solid-state battery utilizing a solid electrolyte has the advantage of eliminating organic solvents, allowing for a safer and simpler form of electrode assembly.

However, all-solid-state batteries have the limitation that their actual energy density and power output is not as high as that of lithium secondary batteries using conventional liquid electrolytes. Since an electrolyte film containing a solid electrolyte is disposed between the positive and negative electrodes of an all-solid-state battery, it is bulky and heavy compared to a conventional lithium secondary battery, resulting in a decrease in energy density per volume and energy density per weight. If the electrolyte film is thinned to prevent this, a short circuit between the positive electrode and the negative electrode may occur.

However, current limited slurry solvent and binder technologies have their limitations. Traditionally, nitrile-butadiene rubber (NBR) has been used as a binder for solid electrolyte membranes for all-solid-state batteries, but it suffers from issues with moisture stability, mechanical properties, and fabrication processability when fabricated with reduced thicknesses.

Solid electrolyte membranes for all-solid-state batteries need to be fabricated as thin films for the purpose of high energy density and reduced resistance, as mentioned earlier, while also satisfying the required properties in terms of bending characteristics, ionic conductivity, and large area utilization.

Therefore, it is necessary to develop solid electrolyte membranes for all-solid-state batteries that not only have excellent ionic conductivity but also have flexibility.

### [Prior Art References]

### [Patent Literature]

Korean Laid-open Publication No. 10-2021-0098246
CN 110383561 A discloses a solid electrolyte film for a lithium battery including styrene-butadiene-styrene copolymer with 33 wt.-% of styrene and sulfide glass containing Li₂S and P₂S₅ as a solid electrolyte particle.
WO 2022/138896 A1 discloses an all sold state battery including a solid state electrolyte film including sulfide electrolyte and styrene-butadiene-styrene block copolymer as binder, which is modified, e.g, by hydrogenation.

### [Detailed Description of the Invention]

### [Technical Problem]

Accordingly, the present inventors have conducted various studies to solve the above problems, and have confirmed that the ionic conductivity and flexibility can be improved by adjusting the content of styrene in the styrene-butadiene-styrene copolymer as a binder, and have completed the present invention.

Accordingly, it is an object of the present invention to provide a solid electrolyte membrane for an all-solid-state battery having excellent ionic conductivity and flexibility.

It is also an object of the present invention to provide an all-solid-state battery comprising the solid electrolyte membrane.

### [Technical Solution]

To accomplish the above objectives, the present invention provides a solid electrolyte membrane for an all-solid-state battery comprising: a solid electrolyte and a binder, wherein the binder comprises a styrene-butadiene-styrene copolymer, and styrene is included relative to the total weight of the styrene-butadiene-styrene copolymer in an amount of 22 to 34 weight%,
wherein the styrene-butadiene-styrene copolymer is represented by Formula 1: 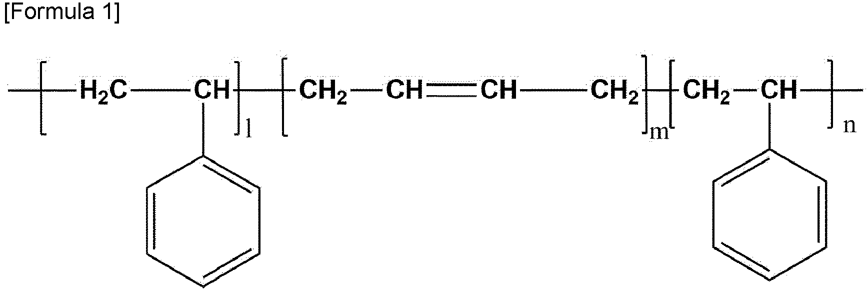
wherein l, m, and n are the same as or different from each other, and are integers of equal to or greater than 100,
wherein, relative to the total weight of the solid electrolyte membrane, the solid electrolyte is included in an amount of 95 to 99.5 weight% and the binder is included in an amount of 0.5 to 5 weight%, and
wherein the solid electrolyte comprises at least one selected from a group consisting of sulfide-based solid electrolytes and oxide-based solid electrolytes.

The present invention also provides an all-solid-state battery comprising: a positive electrode, a negative electrode, and a solid electrolyte membrane interposed therebetween, wherein the solid electrolyte membrane is the aforementioned solid electrolyte membrane of the present invention.

Further embodiments are disclosed in the dependent claims.

### [Advantageous Effects]

The solid electrolyte membrane for an all-solid-state battery of the present invention includes a styrene-butadiene-styrene copolymer as a binder, and can exhibit excellent ionic conductivity and flexibility by adjusting the content of styrene included in the copolymer.

### [Brief Description of Drawings]

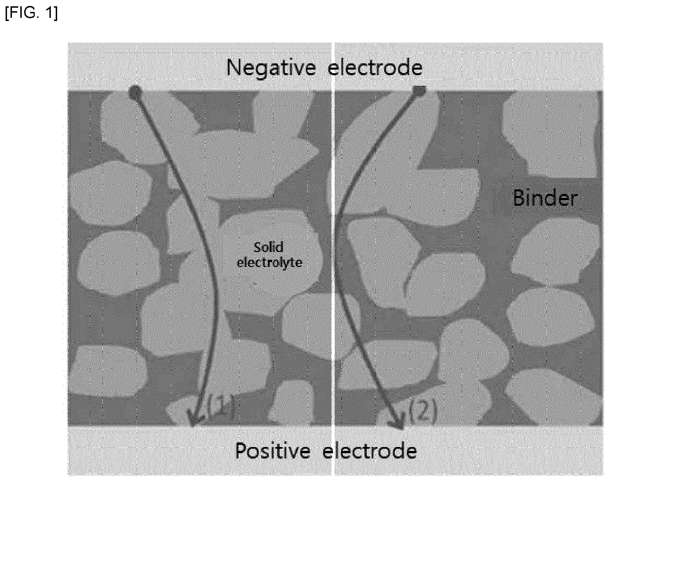

FIG. 1 is a schematic diagram of an all-solid-state battery including a solid electrolyte membrane for an all-solid-state battery of the present invention.

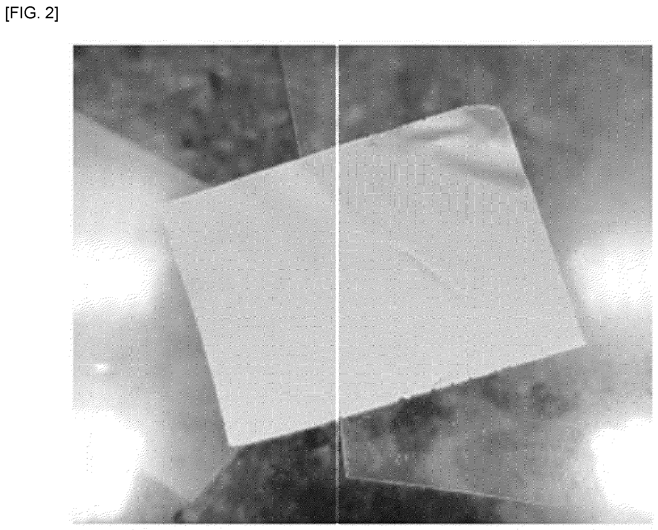

FIG. 2 is a photograph of a solid electrolyte membrane for an all-solid-state battery of the present invention.
FIG. 3 is a graph of the ionic conductivity of a solid electrolyte membrane for an all-solid-state battery of Examples 1 and 2 and Comparative Examples 1 to 3.
FIG. 4 is a photograph of the measured flexibility of a solid electrolyte film for an all-solid-state battery of Example 1.
FIG. 5 is a photograph of the measured flexibility of a solid electrolyte film for an all-solid-state battery of Example 2.
FIG. 6 is a photograph of the measured flexibility of a solid electrolyte film for the all-solid-state battery of Comparative Example 1.
FIG. 7 is a photograph of the measured flexibility of a solid electrolyte film for the all-solid-state battery of Comparative Example 2.
FIG. 8 is a photograph of the measured flexibility of a solid electrolyte film for the all-solid-state battery of Comparative Example 3.
FIG. 9 is a graph of the measured charge and discharge capacities of the all-solid-state battery of Experimental Example 2.
FIG. 10 is a graph of the measured lifetime characteristics of the all-solid-state battery of Experimental Example 2.

### [Best Mode for Practicing the Invention]

Hereinafter, the present invention will be described in more detail.

The terms and words used in this specification and claims are not to be construed to be limited to their ordinary or dictionary sense, but are to be construed in a sense and concept consistent with the technical idea of the present invention, based on the principle that the inventor may properly define the concept of a term to best describe his invention.

The terms used in the present invention are used to describe particular embodiments and are not intended to limit the present invention. The singular expression includes plural ones unless the context clearly indicates otherwise. In the present invention, the terms "includes" or "has" and the like are intended to designate the presence of the features, numbers, steps, actions, components, parts, or combinations thereof recited in the specification and not to preclude the possibility of the presence or addition of one or more other features, numbers, steps, actions, components, parts, or combinations thereof.

Lithium secondary batteries have been used in small-sized applications such as cell phones and laptops, but recently their applications have expanded to medium and large-sized applications such as electric vehicles and energy storage devices. In this case, unlike small-sized batteries, the operating environment is harsh and more batteries need to be used, so it is necessary to secure stability along with excellent performance.

Currently, most commercially available lithium secondary batteries use a liquid electrolyte, which is lithium salt dissolved in an organic solvent, and the organic solvent contained in the liquid electrolyte is easily volatile and flammable, posing a potential risk of ignition and explosion, and leakage may occur, resulting in a lack of long-term reliability.

In response, all-solid-state batteries are being developed to replace the liquid electrolyte in lithium secondary batteries with a solid electrolyte. Since all-solid-state batteries do not contain volatile organic solvents, there is no risk of explosion or fire, and they are attracting attention as a battery that can fabricate high-powered batteries with excellent economics and productivity.

In order to realize the high energy density of all-solid-state batteries, fabrication of thin solid electrolyte films is essential. The solid electrolyte film is fabricated by applying a slurry comprising a solid electrolyte in particulate form and a binder to a release film, drying the slurry, and removing the release film. Depending on the properties of the binder, the dispersibility of the solid electrolyte, the ability to fabricate a solid electrolyte film, and even the charging and discharging characteristics of the all-solid-state battery can be different.

Accordingly, the present invention provides a solid electrolyte membrane for an all-solid-state battery having excellent ionic conductivity by minimizing the degradation of ionic conductivity, and having excellent flexibility to facilitate the fabrication of an all-solid-state battery.

The present invention comprises a solid electrolyte membrane for an all-solid-state battery, comprising: a solid electrolyte and a binder, wherein the binder comprises a styrene-butadiene-styrene copolymer, and styrene is included, relative to the total weight of the styrene-butadiene-styrene copolymer in an amount of 22 to 34 weight%, wherein the styrene-butadiene-styrene copolymer is represented by Formula 1: 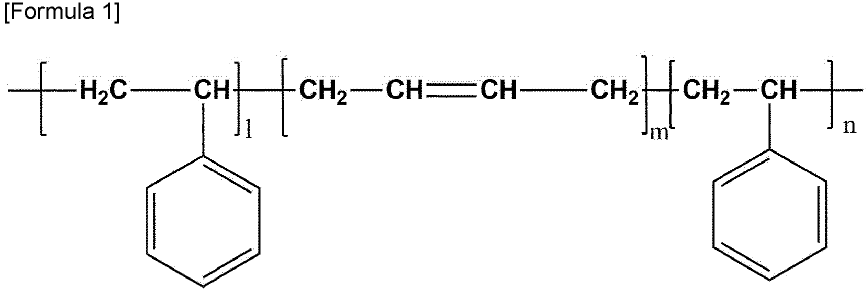
wherein l, m, and n are the same as or different from each other, and are integers of equal to or greater than 100,
wherein, relative to the total weight of the solid electrolyte membrane, the solid electrolyte is included in an amount of 95 to 99.5 weight% and the binder is included in an amount of 0.5 to 5 weight%, and
wherein the solid electrolyte comprises at least one selected from a group consisting of sulfide-based solid electrolytes and oxide-based solid electrolytes.

The solid electrolyte may be in particulate form.

The sulfide-based solid electrolyte is one that contains sulfur(S) and has the ionic conductivity of a metal belonging to the first or second group of the periodic table, and may include a Li-P-S glass or a Li-P-S glass ceramic.

Specifically, the sulfide-based solid electrolyte may include one or more selected from a group consisting of Li₆PS₅Cl, Li₆PS₅Br, Li₆PS₅I, Li₂S-P₂S₅, Li₂S-LiI-P₂S₅, Li₂S-LiI-Li₂O-P₂S₅, Li₂S-LiBr-P₂S₅, Li₂S-Li₂O-P₂S₅, Li₂S-Li₃PO₄-P₂S₅, Li₂S-P₂S₅-P₂S₅, Li₂S-P₂S₅-SiS₂, Li₂S-P₂S₅-SnS, Li₂S-P₂S₅-Al₂S₃, Li₂S-GeS₂ and Li₂S-GeS₂-ZnS, and preferably, may include one or more selected from a group consisting of Li₆PS₅Cl, Li₆PS₅Br and Li₆PS₅I. The Li₆PS₅Cl, Li₆PS₅Br and Li₆PS₅I may be Argyrodite type solid electrolytes. Also, the sulfide-based solid electrolyte may be in a form where a small amount of elements are doped, for example, bromine (Br) may be additionally doped in Li₆PS₅Cl.

The oxide-based solid electrolyte may be one that contains oxygen (O) and has the ionic conductivity of a metal belonging to the first or second group of the periodic table. For example, it may contain one or more selected from a group consisting of LLTO-based compounds, Li₆La₂CaTa₂O₁₂, Li₆La₂ANb₂O₁₂ (A is Ca or Sr), Li₂Nd₃TeSbO₁₂, Li₃BO_{2.5}N_{0.5}, Li₉SiAlO₈, LAGP-based compounds, LATP-based compounds, Li₁₊ₓTi₂₋ₓAlₓSi_{y} (PO₄) _{3-y} (wherein, 0≤x≤1, 0≤y≤1), LiAlₓZr₂₋ₓ (PO₄)₃ (wherein, 0≤x≤1), LiTiₓZr₂₋ₓ(PO₄)₃ (wherein, 0≤x≤1), a LISICON-based compound, a LIPON-based compound, a perovskite-based compound, a nasicon-based compound, and an LLZO-based compound.

The binder comprises a styrene-butadiene-styrene (SBS) copolymer, wherein the styrene-butadiene-styrene copolymer is represented by Formula 1 below. 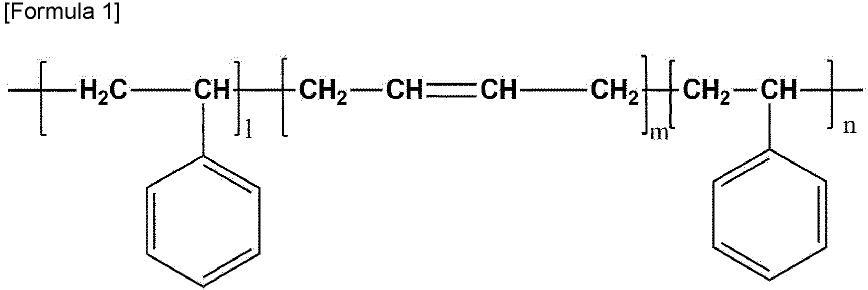 wherein l, m, and n are the same as or different from each other, and are intergers of equal to or greater than 100.

The styrene-butadiene-styrene copolymer can improve the ionic conductivity of a solid electrolyte membrane for an all-solid-state battery by being able to well bind solid electrolytes in particle form without reacting with the solid electrolytes.

The solid electrolyte membrane for the all-solid-state battery also serves as a separator, and is interposed between a positive electrode and a negative electrode when the all-solid-state battery is manufactured, and should not crack. In addition, if the solid electrolyte membrane for the all-solid-state battery is rigid and easily broken, a short circuit of the all-solid-state battery can be easily caused, and thus, the solid electrolyte membrane must have good flexibility.

The solid electrolyte membrane for an all-solid-state battery of the present invention includes styrene at 22 to 34 weight% relative to the total weight of the styrene-butadiene-styrene copolymer so that the present invention can provide a solid electrolyte membrane for an all-solid-state battery with excellent ionic conductivity and flexibility. Furthermore, due to its excellent flexibility, it enables a continuous process for fabricating the all-solid-state battery comprising it, which can have an excellent processing charateristics.

The upper limit of the styrene content may be 31.5 weight%, 32 weight%, 33 weight%, or 34 weight%. Further, the lower limit value of the styrene content may be 22 weight%, 23 weight%, or 23.5 weight%. The styrene content may be a range set by a combination of the above upper and lower limits.

If less than 22 weight% of styrene is included in the total weight of the styrene-butadiene-styrene copolymer, the styrene content, which is in a rigid structure, is low, and the flexibility of the solid electrolyte membrane for an all-solid-state battery can be secured, but the ionic conductivity is low. In addition, if styrene is included in excess of 34 weight% of the total weight of the styrene-butadiene-styrene copolymer, high ionic conductivity can be obtained due to the conjugation structure of styrene, but since styrene is a rigid structure, flexibility cannot be secured, and cracking occurs.

Thus, a styrene-butadiene-styrene copolymer may provide a solid electrolyte membrane for an all-solid-state battery with excellent ionic conductivity and flexibility by including 22 to 34 weight% styrene relative to the total weight of the copolymer.

Furthermore, relative to the total weight of the solid electrolyte film for the all-solid-state battery, the solid electrolyte is included from 95 to 99.5 weight%, and the binder is included from 0.5 to 5 weight%. By including the solid electrolyte and binder as described above, it is possible to fabricate a solid electrolyte film for an all-solid-state battery that can be maintained in a film form while minimizing the content of the binder that acts as a resistance to ionic conductivity.

The solid electrolyte film for the all-solid-state battery may be a free-standing (also known as "self-supporting") film. The free-standing film means that it maintains its shape without the provision of a support. The solid electrolyte film for an all-solid-state battery in the form of the free-standing film may be used in the fabrication process of an all-solid-state battery without any external support components.

Furthermore, the thickness of the solid electrolyte film for the all-solid-state battery may be 30 to 200 µm, and preferably 50 to 100 µm. By having the above thickness, the solid electrolyte film for the all-solid-state battery can be applied to all-solid-state batteries, and can have the effect of having excellent ionic conductivity and flexibility.

The ionic conductivity of the solid electrolyte membrane for the all-solid-state battery may be from 1.2 to 10 mS/cm, preferably from 1.5 to 3 mS/cm.

The solid electrolyte film for the all-solid-state battery may be fabricated by preparing a slurry by mixing the solid electrolyte and the styrene-butadiene-styrene copolymer and a solvent, then applying the slurry to one side of a release film, drying the release film, and removing the release film. In this case, the solvent can be used without any special restrictions, provided that it does not react with the styrene-butadiene-styrene copolymer and solid electrolyte.

The present invention also relates to an all-solid-state battery comprising a positive electrode, a negative electrode, and a solid electrolyte membrane interposed therebetween, wherein the solid electrolyte membrane is the solid electrolyte membrane of the present invention described above.

The all-solid-state battery is a lithium secondary battery, which is not limited to a positive electrode or a negative electrode, and may be a lithium-air battery, a lithium-oxide battery, a lithium-sulfur battery, or a lithium metal battery.

The positive electrode may comprise a positive electrode collector and a positive-electrode active material layer applied to one or both sides of the positive electrode collector.

The positive electrode collector is intended to support a positive-electrode active material, which is not particularly limited, provided that it has good conductivity and is electrochemically stable in the voltage range of the lithium secondary battery. For example, the positive electrode collector may be any metal selected from a group consisting of copper, aluminum, stainless steel, titanium, silver, palladium, nickel, alloys thereof, and combinations thereof, wherein the stainless steel may be surface-treated by carbon, nickel, titanium, or silver, wherein an aluminum-cadmium alloy may be preferably used as the alloy, and wherein calcined carbon, a non-conductive polymer which is surface treated with a conductive material, or a conductive polymer may also be used.

The positive electrode collector can form microscopic unevenness on its surface to strengthen the binding force with the positive-electrode active material, and can take various forms, such as films, sheets, foils, meshes, nets, porous materials, foams, non-woven materials, and the like.

The positive-electrode active material layer may comprise a positive-electrode active material and, optionally, a conductive material and a binder.

The positive-electrode active material may vary depending on the type of all-solid-state battery. For example, the positive-electrode active material may include layered compounds such as lithium cobalt oxide (LiCoO₂) and lithium nickel oxide (LiNiO₂) or their substituted compounds with one or more transition metals; lithium manganese oxides such as Li₁₊ₓMn₂₋ₓO₄(0≤x≤0.33), LiMnO₃, LiMn₂O₃, and LiMnO₂; lithium copper oxide (Li₂CuO₂); vanadium oxides such as LiV₃O₈, V₂O₅, and Cu₂V₂O₇; Ni site-type lithium nickel oxides expressed by the formula LiNi₁₋ₓMₓO₂(M = Co, Mn, Al, Cu, Fe, Mg, B or Ga; 0.01≤x≤0.3); lithium manganese composite oxides expressed by the formula LiMn₂₋ₓMₓO₂(M = Co, Ni, Fe, Cr, Zn or Ta; 0.01≤x≤0.1) or Li₂Mn₃MO₈ (M = Fe, Co, Ni, Cu or Zn); spinel structure lithium manganese composite oxides expressed by LiNiₓMn₂₋ₓO₄; LiCoPO₄; LiFePO₄; elemental sulfur (S8); sulfur compounds such as Li₂Sₙ(n=1), organic sulfur compounds or carbon-sulfur polymers ((C₂Sₓ)ₙ: x=2.5-50, n=2); but not limited thereto.

The conductive material is a material that electrically connects the electrolyte and the positive-electrode active material and serves as a path for electrons to move from the current collector to the positive-electrode active material, and can be used without restriction as long as it does not cause chemical changes in the lithium secondary battery and has porosity and conductivity.

For example, the conductive material can be a porous carbon-based material, such as carbon black, graphite, graphene, activated carbon, carbon fiber, etc.; metallic fibers, such as metal mesh; metallic powders, such as copper, silver, nickel, aluminum, etc.; or organic conductive materials, such as polyphenylene derivatives. These conductive materials may be used alone or in combination.

Currently commercially available conductive materials include the Acetylene Black series (such as Chevron Chemical Company or Gulf Oil Company), Ketjen Black EC series (Armak Company), Vulcan XC-72 (Cabot Company), and Super P (MMM). Examples include acetylene black, carbon black, and graphite.

Further, the positive electrode may further comprise a binder, wherein the binder is intended to further increase the adhesion between the components constituting the positive electrode and between them and the collector, and any binder known in the art may be used.

For example, the binder may be one, or a mixture or copolymer of two or more, selected from a group consisting of a fluoroplastic binder including polyvinylidenefluoride (PVdF) or polytetrafluoroethylene (PTFE); a rubber-based binder including styrene-butadiene rubber (SBR), acrylonitrile-butadiene rubber, and styrene-isoprene rubber; cellulosic binders including carboxyl methyl cellulose (CMC), starch, hydroxypropyl cellulose, and regenerated cellulose; polyalcoholic binders; polyolefin binders including polyethylene and polypropylene; polyimide binders; polyester binders; and silane binders.

The negative electrode may include a negative electrode collector and a negative-electrode active material disposed on the negative electrode collector. Further, the negative electrode, like the positive electrode, may include a conductive material and a binder as needed. In this case, the negative electrode collector, conductive material, and binder are as described above.

The negative-electrode active material may be any material that can reversibly intercalate or deintercalate lithium ions (Li⁺), and any material that can react with lithium ions to reversibly form lithium-containing compounds.

For example, the negative-electrode active material may comprise metallic composite oxides, such as carbonaceous materials selected from a group consisting of crystalline artificial graphite, crystalline natural graphite, amorphous hard carbon, low-crystalline soft carbon, carbon black, acetylene black, Ketjen black, super-P, graphene, and fibrous carbon, silaceous materials, LiₓFe₂O₃ (0≤x≤1), LiₓWO₂ (0≤x≤1), SnₓMe₁₋ₓ Me'_{y}O_{z} (Me: Mn, Fe, Pb, Ge; Me': Al, B, P, Si, elements of Group 1, 2, 3 of the periodic table, halogen); 0<x≤1; 1≤y≤3; 1≤z≤8); lithium metals; lithium alloys; silicon-based alloys; tin-based alloys; SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅; conductive polymers, such as polyacetylene; Li-Co-Ni based materials; titanium oxides; lithium titanium oxides; and the like, but are not limited thereto.

The fabrication of the all-solid-state battery is not particularly limited in the present invention, and known methods may be used.

For example, a solid electrolyte membrane is disposed between a positive electrode and a negative electrode, and the cell is assembled by compression molding thereof. The assembled cell is then installed in a shell and sealed by heating and compression. Laminated packs made of aluminum, stainless steel, etc., and metal containers made of cylindrical or angular shapes can be used as the outer material.

In one example, the electrodes of the positive electrode and negative electrode are fabricated in the form of a slurry composition comprising a respective electrode active material, a solvent, and a binder, which is coated and then dried by a slurry coating process.

The method of coating the electrode slurry on the collector may include dispensing the electrode slurry on the collector and uniformly dispersing it using a doctor blade or the like, die casting, comma coating, screen printing, and the like. The electrode slurry can also be molded onto a separate substrate and bonded to the collector by pressing or lamination methods. The final coating thickness can be controlled by adjusting the concentration of the slurry solution or the number of coatings.

The drying process is the process of removing the solvent and moisture from the slurry in order to dry the slurry coated on the metal collector, which may vary depending on the solvent used. For example, it is performed in a vacuum oven at 50 to 200 °C. Drying methods include, for example, drying by warm air, hot air, low humidity air, vacuum drying, or irradiation with (far) infrared or electromagnetic radiation. The drying time is not particularly limited, but is typically in the range of 30 seconds to 24 hours.

After the aforementioned drying process, a cooling process may be further included. The cooling process could involve slow cooling to room temperature to ensure the proper formation of the recrystallized structure of the binder.

Also, if necessary, after the drying process, to increase the capacity density of the electrode and enhance the adhesion between the collector and the active materials, a pressing process can be performed by passing the electrode through two heated rolls to compress it to the desired thickness. The pressing process is not specifically limited in the present invention, and known pressing processes can be used. For example, it can be performed by passing it between rotating rolls or using a flat plate press.

The shape of the aforementioned all-solid-state battery is not specifically limited, and it can be various shapes such as cylindrical, laminated, coin-shaped, etc.

### [Mode for Practicing the Invention]

Hereinafter, preferred embodiments are presented to facilitate understanding of the present invention, but it will be apparent to those skilled in the art that the following embodiment is only an example of the present invention.

### <Manufacturing of solid electrolyte membrane for all-solid-state battery>

### Example 1.

A slurry was prepared by mixing argyrodite (Li₆PS₅Cl), a styrene-butadiene-styrene copolymer and isobutyl isobutyrate. The styrene-butadiene-styrene copolymer used was one comprising 23.5 weight% styrene (molecular weight 50000) relative to the total weight of the styrene-butadiene-styrene copolymer.

Polyethylene terephthalate was used as the release film, and the slurry was coated on the release film. The release film was then dried for 2 hours at room temperature and then dried in a vacuum oven at a temperature of 70°C for 5 hours, and the release film was removed to fabricate a solid electrolyte membrane for an all-solid-state battery in the form of a free-standing film.

The total weight of the solid electrolyte film for the all-solid-state battery included 99 weight% argyrodite and 1 weight% styrene-butadiene-styrene copolymer. The thickness of the solid electrolyte film for the all-solid-state battery was 100 µm.

### Example 2.

A solid electrolyte membrane for an all-solid-state battery was fabricated by performing the same procedure as in Example 1, except that a styrene-butadiene-styrene copolymer (molecular weight 50000) containing 31.5 weight% styrene, relative to the total weight of the styrene-butadiene-styrene copolymer was used. The thickness of the solid electrolyte film for the all-solid-state battery was 100 µm.

### Comparative Example 1.

A solid electrolyte membrane for an all-solid-state battery was fabricated by performing the same procedure as in Example 1, except that a styrene-butadiene-styrene copolymer (molecular weight 50000) containing 21 weight% styrene, relative to the total weight of the styrene-butadiene-styrene copolymer was used. The thickness of the solid electrolyte film for the all-solid-state battery was 100 µm.

### Comparative Example 2.

A solid electrolyte membrane for an all-solid-state battery was fabricated by performing the same procedure as in Example 1, except that a styrene-butadiene-styrene copolymer (molecular weight 50000) containing 40.5 weight% styrene, relative to the total weight of the styrene-butadiene-styrene copolymer was used. The thickness of the solid electrolyte film for the all-solid-state battery was 100 µm.

### Comparative Example 3.

A solid electrolyte membrane for an all-solid-state battery was fabricated by performing the same procedure as in Example 1, except that a styrene-butadiene-styrene copolymer (molecular weight 50000) containing 35 weight% styrene, relative to the total weight of the styrene-butadiene-styrene copolymer was used. The thickness of the solid electrolyte film for the all-solid-state battery was 100 µm.

### Experimental Example 1. Measurement of ionic conductivity and flexibility of a solid electrolyte membrane for an all-solid-state battery

The ionic conductivity and flexibility of solid electrolyte membranes for all-solid-state batteries fabricated in Examples 1 and 2 and Comparative Examples 1 to 3 above were measured.

The ionic conductivity was measured by placing aluminum foil on the top and bottom surfaces of a solid electrolyte membrane for the all-solid-state battery, assembling a jig cell, and pressurizing it to 360 MPa.

Flexibility was measured by observing whether a solid electrolyte film for the all-solid-state battery would crack when wound on a 2 mm diameter mandrel.

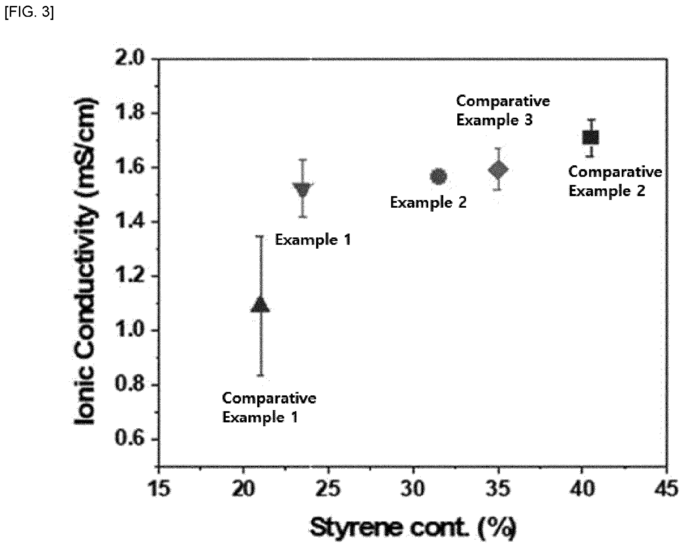

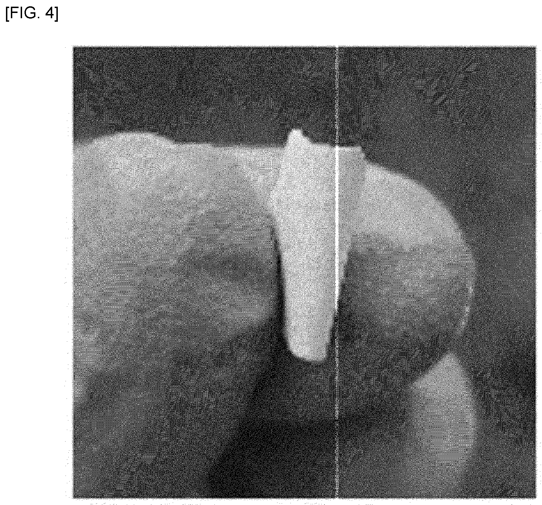

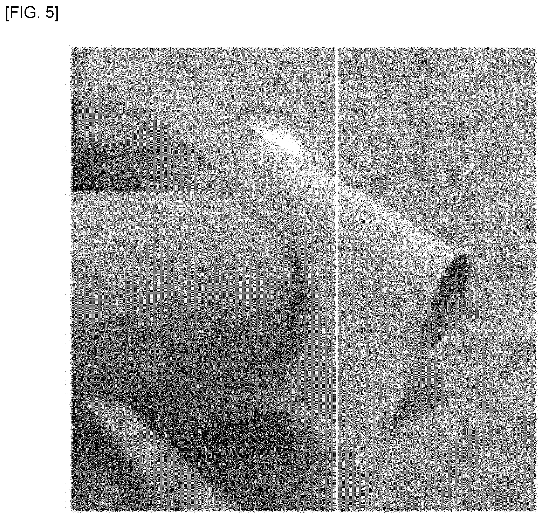

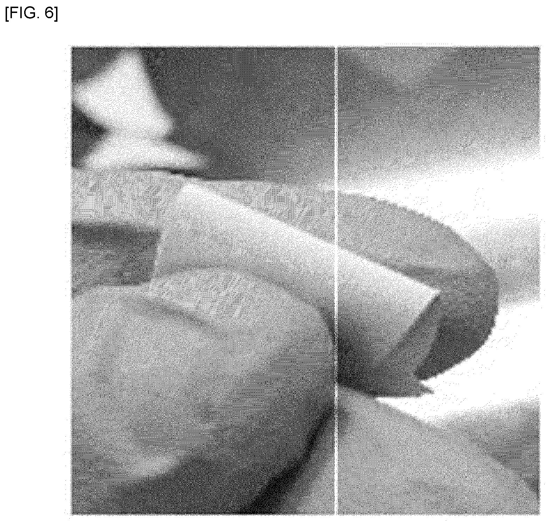

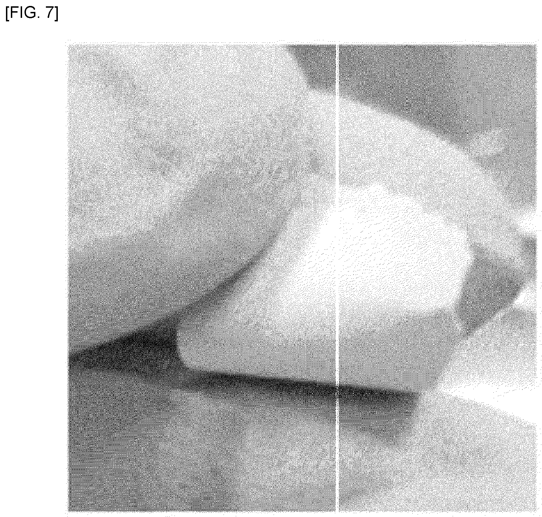

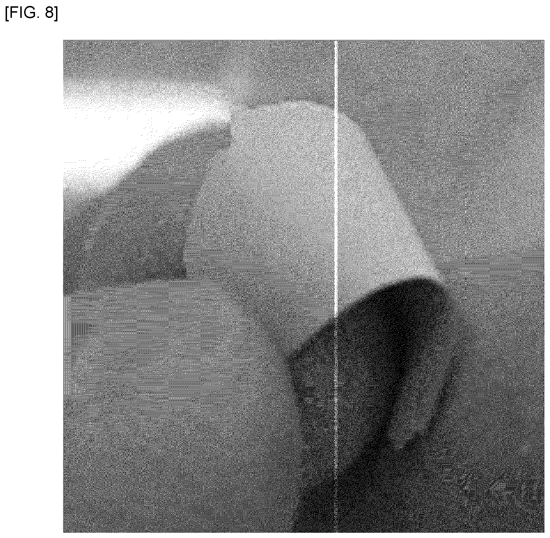

The ionic conductivity and flexibility results are shown in Table 1 and FIGS. 3 to 8 below.

**[Table 1]**

| | Styrene Content | Ionic conductivity | Cracking |
|---|---|---|---|
| Example 1 | 23.5 Weight% | 1.523 mS/cm | X |
| Example 2 | 31.5 Weight% | 1.568 mS/cm | X |
| Comparative Example 1 | 21 Weight% | 1.089 mS/cm | X |
| Comparative Example 2 | 40.5 Weight% | 1.708 mS/cm | O |
| Comparative Example 3 | 35 Weight% | 1.593 mS/cm | O |

From the results in Table 1 above, Examples 1 and 2 showed excellent ionic conductivity and good flexibility without cracking due to the inclusion of styrene from 22 to 34 weight% styrene, relative to the total weight of the styrene-butadiene-styrene copolymer.

Comparative Example 1, which contains less than 22 weight% styrene by weight relative to the total weight of the styrene-butadiene-styrene copolymer, does not crack and thus provides flexibility, but showed poor ionic conductivity.

Comparative Examples 2 and 3 contained more than 34 weight% styrene relative to the total weight of the styrene-butadiene-styrene copolymer, and thus showed better ionic conductivity than the examples, but were found to be cracked and inflexible.

Thus, it can be seen that a solid electrolyte membrane for an all-solid-state battery comprising 22 to 34 weight% styrene, relative to the total weight of the styrene-butadiene-styrene copolymer, has excellent ionic conductivity and flexibility.

### Experimental Example 2. Evaluation of the charge and discharge characteristics of an all-solid-state battery

A positive-electrode active material (NCM 811), a conductive material (carbon fiber), a solid electrolyte (Li₆PS₅Cl), and a binder (polytetrafluoroethylene) were mixed in a weight ratio of 84:0.2:14.8:1, and a positive electrode was fabricated by rolling the above mixture.

A negative electrode was fabricated by applying a mixture of a negative-electrode active material (carbon black) and a binder (polyvinylidene fluoride) with a thickness of 150 µm on a 10 µm thick SUS, which is the negative electrode collector.

Solid electrolyte membranes for the all-solid-state battery fabricated in Examples 1 and 2 and Comparative Examples 1 and 2, respectively, were interposed between the respective positive and negative electrodes, and then pressurized to fabricate mono-cell-shaped all-solid-state batteries.

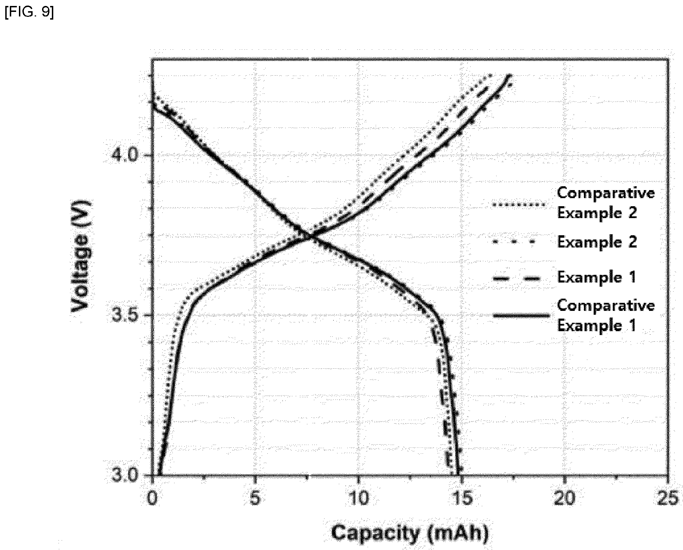

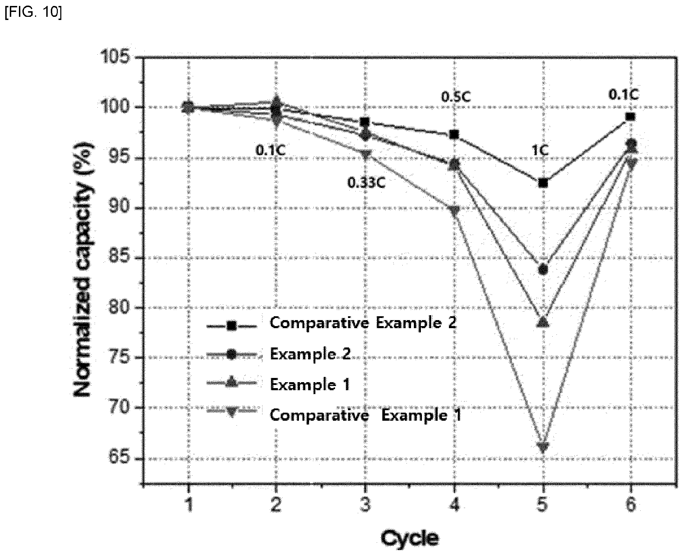

The charging and discharging characteristics of the all-solid-state batteries of Examples 1 and 2 and Comparative Examples 1 and 2 were measured by repeatedly charging and discharging each of the above all-solid-state batteries from 3.0 to 4.25 V, 1 C. The results are shown in FIGS. 9 and 10.

From the results in FIG. 9, the initial charge and discharge capacities of the all-solid-state batteries of Examples 1 and 2 and Comparative Examples 1 and 2 had similar results.

In the results of FIG. 10, the higher the content of styrene relative to the total weight of the styrene-butadiene-styrene copolymer, the better the life characteristics, i.e., Comparative Example 2 with the highest content of styrene had the best life characteristics, and Comparative Example 1 with the lowest content of styrene had the lowest life characteristics. This is to be expected as the higher styrene content has a higher ionic conductivity. However, Comparative Example 2 contained more than 34 weight% styrene, relative to the total weight of the styrene-butadiene-styrene copolymer, which resulted in poor flexibility such as cracking in the results of Experimental Example 1. Accordingly, it was not easy to fabricate an all-solid-state battery using the solid electrolyte membrane for the all-solid-state battery of Comparative Example 2, and even after fabricating the all-solid-state battery, the solid electrolyte membrane failed to maintain its shape and cracked, resulting in a high initial failure rate, such as a short circuit occurring during initial charging.

Thus, it can be seen that the inclusion of styrene at 22 to 34 weight% relative to the total weight of the styrene-butadiene-styrene copolymer can provide a solid electrolyte membrane for an all-solid-state battery with good ionic conductivity and flexibility, thereby improving the charge and discharge characteristics of the all-solid-state battery.

## Claims

1. A solid electrolyte membrane for an all-solid-state battery, comprising:
a solid electrolyte and a binder,
wherein the binder comprises a styrene-butadiene-styrene copolymer, and styrene is included relative to the total weight of the styrene-butadiene-styrene copolymer in an amount of 22 to 34 weight%,
wherein the styrene-butadiene-styrene copolymer is represented by Formula 1: 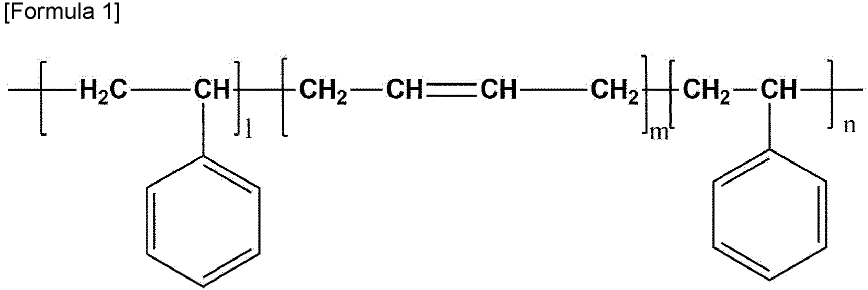
wherein l, m, and n are the same as or different from each other, and are integers of equal to or greater than 100,
wherein, relative to the total weight of the solid electrolyte membrane, the solid electrolyte is included in an amount of 95 to 99.5 weight% and the binder is included in an amount of 0.5 to 5 weight%, and
wherein the solid electrolyte comprises at least one selected from a group consisting of sulfide-based solid electrolytes and oxide-based solid electrolytes.

2. The solid electrolyte membrane for an all-solid-state battery according to claim 1, wherein the solid electrolyte membrane is a free-standing film.

3. The solid electrolyte membrane for an all-solid-state battery according to claim 1, wherein a thickness of the solid electrolyte membrane is 30 to 200 µm.

4. The solid electrolyte membrane for an all-solid-state battery according to claim 1, wherein an ionic conductivity of the solid electrolyte membrane is 1.2 to 10 mS/cm, wherein the ionic conductivity is measured as disclosed in the specification.

5. An all-solid-state battery comprising: a positive electrode, a negative electrode, and a solid electrolyte membrane interposed therebetween, wherein the solid electrolyte membrane is the solid electrolyte membrane according to any one of claims 1 to 4.

## Patentansprüche

1. Festelektrolytmembran für eine Festkörperbatterie, umfassend:
einen Festelektrolyten und ein Bindemittel,
wobei das Bindemittel ein Styrol-Butadien-Styrol-Copolymer umfasst und Styrol bezogen auf das Gesamtgewicht des Styrol-Butadien-Styrol-Copolymers in einer Menge von 22 bis 34 Gew.-% enthalten ist,
wobei das Styrol-Butadien-Styrol-Copolymer durch Formel 1 dargestellt wird: 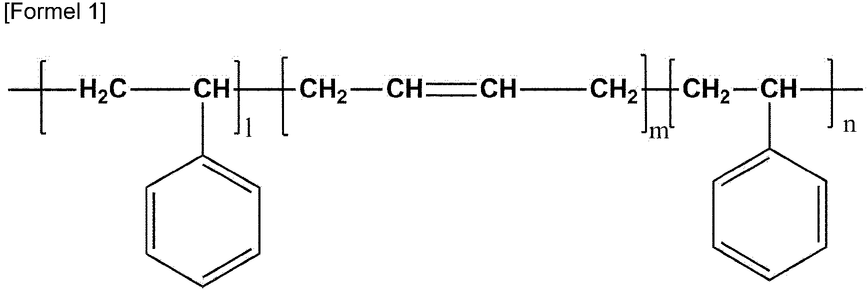
wobei I, m und n gleich oder voneinander verschieden sind und ganze Zahlen gleich oder größer als 100 sind,
wobei bezogen auf das Gesamtgewicht der Festelektrolytmembran der Festelektrolyt in einer Menge von 95 bis 99,5 Gew.-% enthalten ist und das Bindemittel in einer Menge von 0,5 bis 5 Gew.-% enthalten ist, und
wobei der Festelektrolyt mindestens einen ausgewählt aus einer Gruppe bestehend aus Festelektrolyten auf Sulfidbasis und Festelektrolyten auf Oxidbasis umfasst.

2. Festelektrolytmembran für eine Festkörperbatterie nach Anspruch 1, wobei die Festelektrolytmembran ein freistehender Film ist.

3. Festelektrolytmembran für eine Festkörperbatterie nach Anspruch 1, wobei eine Dicke der Festelektrolytmembran 30 bis 200 µm beträgt.

4. Festelektrolytmembran für eine Festkörperbatterie nach Anspruch 1, wobei eine Ionenleitfähigkeit der Festelektrolytmembran 1,2 bis 10 mS/cm beträgt, wobei die Ionenleitfähigkeit wie in der Beschreibung offenbart gemessen wird.

5. Festkörperbatterie, umfassend: eine positive Elektrode, eine negative Elektrode und eine Festelektrolytmembran, die dazwischen angeordnet ist, wobei die Festelektrolytmembran die Festelektrolytmembran nach einem der Ansprüche 1 bis 4 ist.

## Revendications

1. Membrane d'électrolyte solide pour une batterie tout-solide, comprenant :
un électrolyte solide et un liant,
dans laquelle le liant comprend un copolymère de styrène-butadiène-styrène, et le styrène est inclus par rapport au poids total du copolymère de styrène-butadiène-styrène dans une quantité de 22 à 34 % en poids,
dans laquelle le copolymère de styrène-butadiène-styrène est représenté par la Formule 1 : 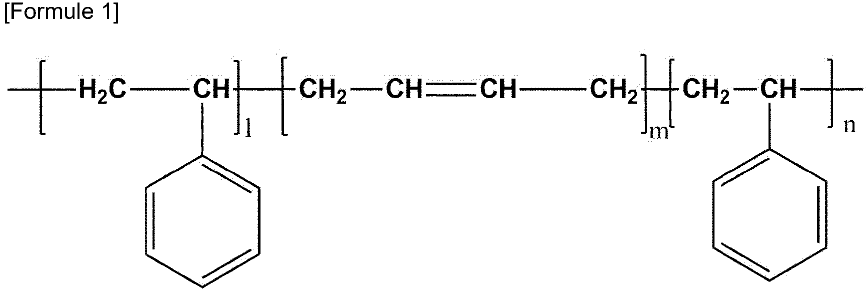
dans laquelle l, m et n sont identiques ou différents les uns des autres, et sont des nombres entiers égaux ou supérieurs à 100,
dans laquelle, par rapport au poids total de la membrane d'électrolyte solide, l'électrolyte solide est inclus dans une quantité de 95 à 99,5 % en poids et le liant est inclus dans une quantité de 0,5 à 5 % en poids, et
dans laquelle l'électrolyte solide comprend un ou plusieurs électrolytes sélectionnés dans un groupe constitué d'électrolytes solides à base de sulfure et d'électrolytes solides à base d'oxyde.

2. Membrane d'électrolyte solide pour une batterie tout-solide selon la revendication 1, dans laquelle la membrane d'électrolyte solide est un film autonome.

3. Membrane d'électrolyte solide pour une batterie tout-solide selon la revendication 1, dans laquelle une épaisseur de la membrane d'électrolyte solide est 30 à 200 µm.

4. Membrane d'électrolyte solide pour une batterie tout-solide selon la revendication 1, dans laquelle une conductivité ionique de la membrane d'électrolyte solide est 1,2 à 10 mS/cm, dans laquelle la conductivité ionique est mesurée comme décrite dans la spécification.

5. Batterie tout-solide comprenant : une électrode positive, une électrode négative et une membrane d'électrolyte solide interposée entre celles-ci, dans laquelle la membrane d'électrolyte solide est la membrane d'électrolyte solide selon l'une quelconque des revendications 1 à 4.
